# EUROPEAN PATENT SPECIFICATION

(11) **EP 2 217 432 B1**
(45) Date of publication and mention of the grant of the patent: **16.11.2011**
(21) Application number: 08860384.0
(22) Date of filing: 11.12.2008
(51) Int. Cl.: B29D 30/20

(54) **ASSEMBLY OF UNITS FOR BUILDING AN UNVULCANISED OR GREEN TYRE FOR VEHICLES**
ANORDNUNG VON EINHEITEN ZUR PRODUKTION EINES NICHT VULKANISIERTEN ODER GREEN TYRE-REIFENS FÜR FAHRZEUGE
ENSEMBLE D'UNITÉS PERMETTANT DE FABRIQUER UN PNEU NON VULCANISÉ OU PNEU VERT POUR VÉHICULES

(30) Priority: 11.12.2007 NL 2001071; 11.12.2007 US 7100
(43) Date of publication of application: 18.08.2010
(73) Proprietor: VMI Holland B.V., 8161 RK Epe (NL)
(72) Inventor: GROLLEMAN, Henk-Jan, NL-6961 VC Eerbeek (NL)
(74) Representative: Peters, Sebastian Martinus
(86) International application number: PCT/NL2008/050793
(87) International publication number: WO 2009/075576

(56) References cited:
- EP-A- 0 597 125
- EP-A- 0 676 277
- EP-B- 0 880 436
- DE-C1- 19 918 523

## Description

### BACKGROUND OF THE INVENTION

The invention relates to an assembly of units for building an unvulcanised or green tyre for vehicles, wherein the assembly is provided with a first unit having a breaker building drum, a drive for the breaker building drum and a stitcher for stitching breaker material to be arranged on the breaker building drum, a second unit having a carcass building drum, a drive for the carcass building drum and a stitcher for stitching carcass material to be arranged on the carcass building drum, a third unit having a shaping drum, a drive for the shaping drum, a support for the shaping drum, and a stitcher for stitching tyre material to be arranged on the shaping drum, a breaker ply supply unit for supplying breaker plies to the breaker building drum, a carcass material supply unit for supplying carcass material to the carcass building drum, a first transportation rail, wherein the first transportation rail considered in vertical direction is placed below the shaping drum and the carcass building drum, a unit for retaining and positioning beads, which unit comprises bead placement devices, that are movably placed on the first transportation rail for supplying beads to a carcass drum, and a bead loading device, a first breaker transfer ring movably placed on the first transportation rail, a second carcass transfer ring movably placed on the first transportation rail, and a removing unit for removing a green tyre.

Such an assembly is for instance known from European patent specification EP-B1-0.880.436. Although such an assembly as regards the type of tyre to be manufactured is relatively flexible and of a high production capacity, it has turned out that particularly in case of manufacturing tyres intended for vehicles that are often used off the road, the known assembly is not sufficiently flexible. Said so-called off-the-road tyres intended for vehicles that can be used off the road often have relatively large dimensions and many tyre components, that may differ per tyre to quite some extent. Due to said many different components an assembly of units for manufacturing them is relatively bulky and the logistics, particularly supplying the various tyre components to the units is a relatively great problem.

### SUMMARY OF THE INVENTION

European patent application EP 597 125 - A discloses such an assembly of units for building a green tire, the assembly comprising the combination of features as defined in the preamble of claim 1 of the present specification.

It is among others an object of the invention to provide an assembly of units for building an unvulcanised or green tyre, particularly off-the-road tyres, for vehicles which assembly is relatively compact, offers a high flexibility for manufacturing tyres of different types and wherein the logistics, and with which a relatively high production capacity can be achieved and the supply of the various tyre components can be simplified.

To that end an assembly of the type mentioned in the preamble of claim 1 is according to the invention **characterised in that** the assembly is furthermore provided with a second transportation rail, wherein the second transportation rail extends spaced apart from and parallel to the first transportation rail and is placed adjacent to the carcass building drum, a number of arrangement units for arranging rubber material, such as a chafer, wound on a roll, on the carcass building drum, wherein the arrangement units can be moved over the second transportation rail. By using a second transportation rail over which arrangement units for rubber material wound on a roll can be moved, the assembly of units can be designed relatively compact, and in a relatively flexible manner various tyre components can be used for manufacturing a green tyre. The second transportation rail also simplifies the logistics. Particular embodiments of the invention are difined in the dependent claims.

A further improvement of the flexibility and the logistics can be achieved when the second transportation rail at one side extends to beyond the first transportation rail, and when the assembly is provided with a unit for arranging pre-cut rubber material, which unit is provided with a number of supply conveyors for supplying pre-cut rubber material, and a number of arrangement conveyors for picking up pre-cut rubber material supplied by the supply conveyors and for arranging the pre-cut rubber material on the carcass building drum, wherein the arrangement conveyors can be moved over the second transportation rail.

A yet further improvement of the flexibility and the logistics can be achieved when the carcass material supply unit is provided with a first member and a second member, with a third transportation rail placed between the first member and the second member, and with a transfer conveyor for transferring carcass material from the first member to the second member, wherein the transfer conveyor can be moved over the third transportation rail.

A yet further improvement of the flexibility and the logistics can be achieved when the first member comprises a number of adjacently situated sub members, wherein each sub member is intended for supplying an own carcass material.

A yet further improvement of the flexibility and the logistics can be achieved when the breaker ply supply unit is provided with a rotatable carousel having a number of supply devices for supplying rubber material wound on a roll, a cutting unit having a cutting device and a cutting conveyor for picking up rubber material supplied by a supply device, and a supply conveyor for supplying cut rubber material supplied by the cutting conveyor to the breaker building drum.

The production capacity can furthermore be improved when the breaker building drum can be moved transverse to the first transportation rail between a position vertically above the first transportation rail and a position spaced apart adjacent to the first transport rail.

### SHORT DESCRIPTION OF THE DRAWINGS

The invention will be elucidated on the basis of an exemplary embodiment shown in the attached drawing, in which:

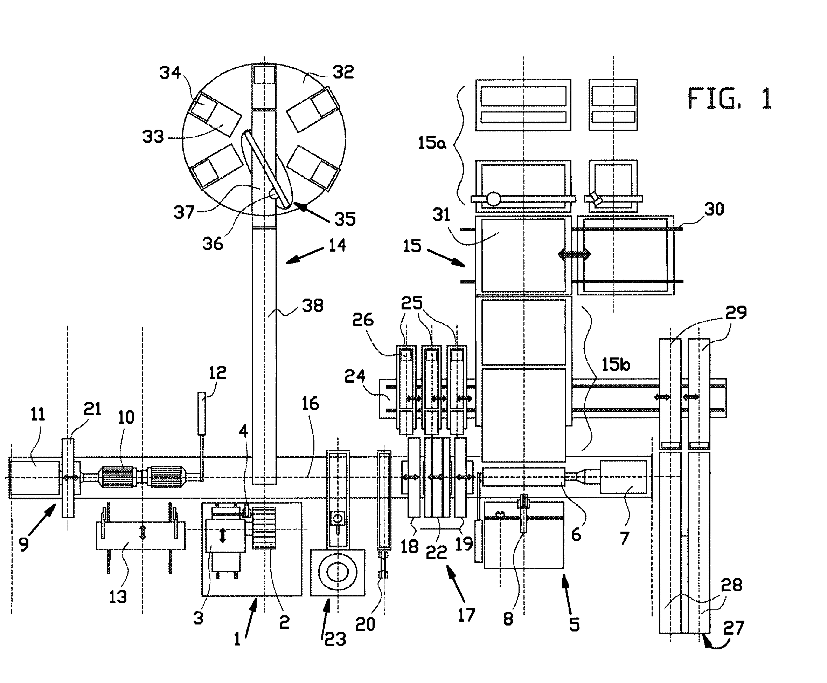

Figure 1 schematically shows an arrangement of an assembly of units for building an unvulcanised or green tyre for vehicles.

### DETAILED DESCRIPTION OF THE DRAWINGS

Figure 1 schematically shows an exemplary arrangement of an assembly of units for building an unvulcanised or green tyre for vehicles. The assembly is particularly suitable for building a so-called off-the-road tyre.

The assembly comprises a first unit 1 having a breaker building drum 2, a drive 3 for the breaker building drum 2 and a stitcher 4 for stitching breaker material to be arranged on the breaker building drum 2. The breaker building drum 2 can be moved transverse to a first transportation rail 16 (to be discussed further below) between a position vertically above the first transportation rail 16 and a position spaced apart adjacent to the first transportation rail 16. Such a breaker building drum is known per se and therefore will not be discussed in further detail here.

The assembly furthermore comprises a second unit 5 having a carcass building drum 6, a drive 7 for the carcass building drum 6 and a stitcher 8 for stitching carcass material to be arranged on the carcass building drum 6. Such a carcass building drum is known per se and therefore will not be discussed in further detail here.

The assembly further comprises a third unit 9 having a shaping drum (also called building drum) 10, a drive 11 for the shaping drum 10, a support 12 for the shaping drum 10, and a stitcher 1 3 for stitching the tyre material to be arranged on the shaping drum 10. Such a building drum is known per se and therefore will not be discussed in further detail here.

The assembly is furthermore provided with a breaker ply supply unit 14 for supplying breaker plies to the breaker building drum 2, and a carcass material supply unit 15 for supplying carcass material to the carcass drum 6. In a manner known per se the supply units may comprise one or several conveyors, such as belt conveyors, roller conveyors or the like.

Considered in vertical direction the first transportation rail 16 of the assembly is placed below the shaping drum 10 and the carcass building drum 6.

The assembly furthermore comprises a unit 17 for retaining and positioning beads, which unit 17 comprises bead placement devices 18, 19, that are movably placed on the first transportation rail 16 for supplying beads to a carcass drum, and a bead loading device 20. Such a bead placement unit is known per se and therefore will not be discussed in further detail here.

The assembly furthermore comprises a first breaker transfer ring 21, movably mounted on the first transportation rail 16, a second carcass transfer ring 22 movably mounted on the first transportation rail 16. Such transfer rings are known per se and therefore will not be discussed in further detail here. According to an individual aspect of the invention the bead placement devices 18, 19 can be detachably coupled to the carcass transfer ring 22. Thus an improvement of the production capacity can be realised.

The assembly is furthermore provided with a removing unit 23 for removing a green tyre that is ready. Such a removing unit is known per se and therefore will not be discussed in further detail here.

By using a second transportation rail 24, which extends spaced apart from and parallel to the first transport rail 16 and is placed adjacent to the carcass building drum 6, and a number of arrangement units 25 for arranging rubber material, such as a chafer, wound on a roll 26, on the carcass building drum 6, which arrangement units 25 are arranged so as to be movable over the second transportation rail 24, the flexibility of the assembly is strongly increased.

As shown in the exemplary embodiment depicted in figure 1, the second transportation rail 24 at one side extends to beyond the first transportation rail 16. At said side the assembly is provided with a unit 27 for arranging pre-cut rubber material.

Said unit 27 is provided with a number of supply conveyors 28 for supplying pre-cut rubber material, and with a number of arrangement conveyors 29 for picking up pre-cut rubber material supplied by the supply conveyors. The arrangement conveyors are also intended for arranging the pre-cut rubber material on the carcass building drum 6. These arrangement conveyors 29 as well can be moved over the second transportation rail 24, as a result of which on the one hand the flexibility of the assembly is strongly increased but the compactness is also preserved.

As shown in the exemplary embodiment depicted in figure 1, the carcass material supply unit 15 is built up from a first member 15a and a second member 15b. A third transportation rail 30 is placed between the first member 15a and the second member 15b. A transfer conveyor 31 for transferring carcass material from the first member 15a to the second member 15b, is arranged so as to be movable over the third transportation rail 30. In the exemplary embodiment shown the first member 15a comprises a number of adjacently situated sub members, wherein each sub member is intended for supplying its own carcass material. In that way it is possible that each member (15a and 15b, respectively) supply a different type of carcass material to the carcass building drum, without a lot of space being taken up for that purpose. In the embodiment shown the number of members is two, yet it will be clear to an expert that any other number can be applied within the scope of the invention.

The breaker ply supply unit 14 comprises a rotatable carousel 32 having a number of supply devices 33, in the exemplary embodiment shown six although any other number can also be applied, for supplying rubber material wound on a roll 34. The breaker ply supply unit further comprises a cutting unit 35 having a cutting device 36 and a cutting conveyor 37 for picking up rubber material supplied by a supply device 33. For transportation to the cutting conveyor the supply device 33 may comprise a supply conveyor or table connecting to the roll. The cutting conveyor 37 supplies the cut rubber material to a supply conveyor 38 which in turn is intended for supplying cut rubber material to the breaker building drum 2.

The assembly described above provides a compact and flexible assembly for building tyres having relatively many parts, wherein many of said parts are supplied to the carcass building drum in a simple manner by the second transportation rail over which several arrangement units (25, 29) can be moved. Because of the third transportation rail and the transfer conveyor 31 and because of the carousel 32 (for various breaker materials, for instance having different angles) the flexibility of the assembly is further improved. Due to using the carousel only one, preferably, automatically adjustable cutting device and one supply conveyor 38 are needed. For arranging rubber components on the building drum 10 several arrangement units are available, which are supplied via the various units (14, 15, 17, 27). In that case the second and third transportation rails and the carousel render a compact assembly possible, as a result of which the rubber components can quickly be assembled into a green tyre, in which way undesired vulcanisation of the rubber components due to unnecessary storage can be prevented to a large degree.

The above description is included to illustrate the operation of preferred embodiments of the invention and not to limit the scope of the invention. Starting from the above explanation many variations that fall within the scope of the present invention will be evident to an expert.

## Claims

1. Assembly of units for building an unvulcanized or green tyre for vehicles, wherein the assembly is provided with:
a first unit (1) having a breaker building drum (2), a drive (3) for the breaker building drum (2) and a stitcher (4) for stitching breaker material to be arranged on the breaker building drum (2)
a second unit (5) having a carcass building drum (6), a drive (7) for the carcass building drum (6) and a stitcher (8) for stitching carcass material to be arranged on the carcass building drum (6),
a third unit (9) having a shaping drum (10), a drive (11) for the shaping drum (10), a support (12) for the shaping drum (10), and a stitcher (13) for stitching tyre material to be arranged on the shaping drum (10),
a breaker ply supply unit (14) for supplying breaker plies to the breaker building drum (2),
a carcass material supply unit (15) for supplying carcass material to the carcass building drum (6),
a first transportation rail (16), wherein the first transportation rail (16) considered in vertical direction is placed below the shaping drum (10) and the carcass building drum (6),
a unit (17) for retaining and positioning beads, which unit (17) comprises bead placement devices (18, 19), that are movably placed on the first transportation rail (16) for supplying beads to a carcass drum, and a bead loading device (20),
a first breaker transfer ring (21) movably placed on the first transportation rail (16),
a second carcass transfer ring (22) movably placed on the first transportation rail (16), and
a removing unit (23) for removing a green tyre,
**characterised in that** the assembly is furthermore provided with
a second transportation rail (24), wherein the second transportation rail (24) extends spaced apart from and parallel to the first transportation rail (16) and is placed adjacent to the carcass building drum (6),
a number of arrangement units (25) for arranging rubber material, such as a chafer, wound on a roll (26), on the carcass building drum (6), wherein the arrangement units (25) can be moved over the second transportation rail (24).

2. Assembly according to claim 1, wherein the second transportation rail (24) at one side extends to beyond the first transportation rail (16), and wherein the assembly is provided with a unit (27) for arranging pre-cut rubber material, which unit (27) is provided with a number of supply conveyors (28) for supplying pre-cut rubber material, and a number of arrangement conveyors (29) for picking up pre-cut rubber material supplied by the supply conveyors and for arranging the pre-cut rubber material on the carcass building drum (6), wherein the arrangement conveyors (29) can be moved over the second transportation rail.

3. Assembly according to claim 1 or 2, wherein the carcass material supply unit (15) is provided with a first member (15a) and a second member (15b), with a third transportation rail (30) placed between the first member (15a) and the second member (15b), and with a transfer conveyor (31) for transferring carcass material from the first member (15a) to the second member (15b), wherein the transfer conveyor (31) can be moved over the third transportation rail (30).

4. Assembly according to claim 3, wherein the first member (15a) comprises a number of adjacently situated sub members, wherein each sub member is intended for supplying an own carcass material.

5. Assembly according to any one of the preceding claims, wherein the breaker ply supply unit (14) is provided with a rotatable carousel (32) having a number of supply devices (33) for supplying rubber material wound on a roll (34), a cutting unit (35) having a cutting device (36) and a cutting conveyor (37) for picking up rubber material supplied by a supply device (33), and a supply conveyor (38) for supplying cut rubber material supplied by the cutting conveyor (37) to the breaker building drum (2).

6. Assembly according to any one of the preceding claims, wherein the breaker building drum (2) can be moved transverse to the first transportation rail (16) between a position vertically above the first transportation rail (16) and a position spaced apart adjacent to the first transportation rail (16).

## Patentansprüche

1. Anordnung von Einheiten zum Herstellen eines nicht vulkanisierten Reifens oder Reifenrohlings für Fahrzeuge, wobei die Anordnung enthält:
eine erste Einheit (1), die eine Gürtelbautrommel (2), einen Antrieb (3) für die Gürtelbautrommel (2) und eine Heftvorrichtung (4) zum Heften von Gürtelmaterial hat, das auf der Gürtelbautrommel (2) anzuordnen ist,
eine zweite Einheit (5), die eine Karkassenbautrommel (6), einen Antrieb (7) für die Karkassenbautrommel (6) und eine Heftvorrichtung (8) zum Heften von Karkassenmaterial hat, das auf der Karkassenbautrommel (6) anzuordnen ist,
eine dritte Einheit (9), die eine Formtrommel (10) einen Antrieb (11) für die Formtrommel (10), eine Halterung (12) für die Formtrommel (10) und eine Heftvorrichtung (13) zum Heften von Reifenmaterial hat, das auf der Formtrommel (10) anzuordnen ist,
eine Gürtellagenzuführeinheit (14) zum Zuführen von Gürtellagen zu der Gürtelbautrommel (2),
eine Karkassenmaterialzuführeinheit (15) zum Zuführen von Karkassenmaterial zu der Karkassenbautrommel (6),
eine erste Transportschiene (16), wobei die erste Transportschiene (16), in vertikaler Richtung betrachtet, unter der Formtrommel (10) und der Karkassenbautrommel (6) angeordnet ist,
eine Einheit (17) zum Halten und Positionieren von Wülsten, wobei die Einheit (17) Wulstanordnungsvorrichtungen (18, 19), die beweglich auf der ersten Transportschiene (16) angebracht sind, um Wülste einer Karkassentrommel zuzuführen, und eine Wulstladevorrichtung (20) enthält,
einen ersten Gürtelübertragungsring (21), der beweglich auf der ersten Transportschiene (16) angebracht ist,
einen zweiten Karkassenübertragungsring (22), der beweglich auf der ersten Transportschiene (16) angebracht ist, und
eine Entnahmeeinheit (23) zum Entnehmen eines Reifenrohlings,
**dadurch gekennzeichnet, dass** die Anordnung weiterhin ausgestattet ist mit einer zweiten Transportschiene (24), wobei sich die zweite Transportschiene (24) beabstandet und parallel zu der ersten Transportschiene (16) erstreckt und benachbart zu der Karkassenbautrommel (6) angeordnet ist, und
einer Anzahl von Anordnungseinheiten (25) zum Anordnen von Gummimaterial, wie etwa Wulststoff, der auf eine Rolle (26) gewickelt ist, auf der Karkassenbautrommel (6), wobei die Anordnungseinheiten (25) über die zweite Transportschiene (24) bewegt werden können.

2. Anordnung nach Anspruch 1, bei der sich die zweite Transportschiene (24) auf einer Seite über die erste Transportschiene (16) hinaus erstreckt und die Anordnung mit einer Einheit (27) zum Anordnen vorgeschnittenen Gummimaterials ausgestattet ist, wobei diese Einheit (27) mit einer Anzahl von Zuführfördereinrichtungen (28), zum Zuführen des vorgeschnittenen Gummimaterials, und einer Anzahl von Anordnungsfördereinrichtungen (29) versehen ist, die das vorgeschnittene Gummimaterial, das von den Zuführfördereinrichtungen zugeführt wird, aufnehmen und das vorgeschnittene Gummimaterial auf der Karkassenbautrommel (6) anordnen, und die Anordnungsfördereinrichtungen (29) über die zweite Transportschiene bewegt werden können.

3. Anordnung nach Anspruch 1 oder 2, bei der die Karkassenmaterialzuführeinheit (15) mit einem ersten Element (15a) und einem zweiten Element (15b) ausgestattet ist, wobei eine dritte Transportschiene (30) zwischen dem ersten Element (15a) und dem zweiten Element (15b) angeordnet ist, und mit einer Überführungsfördereinrichtung (31) zum Überführen von Karkassenmaterial von dem ersten Element (15a) zu dem zweiten Element (15b), wobei die Überführungsfördereinrichtung (31) über die dritte Transportschiene (30) bewegt werden kann.

4. Anordnung nach Anspruch 3, bei der das erste Element (15a) eine Anzahl von benachbart angeordneten Teilelementen enthält, wobei jedes Teilelement dazu bestimmt ist, ein eigenes Karkassenmaterial zuzuführen.

5. Anordnung nach einem der vorhergehenden Ansprüche, bei der die Gürtellagenzuführeinheit (14) enthält: ein drehbares Karussell (32), das eine Anzahl von Zuführvorrichtungen (33) zum Zuführen von Gummimaterial enthält, das auf eine Rolle (34) gewickelt ist, eine Schneideinheit (35), die eine Schneidvorrichtung (36) und eine Schneidfördereinrichtung (37) zum Aufnehmen von Gummimaterial hat, das von einer Zuführvorrichtung (33) zugeführt wird, und eine Zuführfördereinrichtung (38) zum Zuführen geschnittenen Gummimaterials, das von der Schneidfördereinrichtung (37) zugeführt wird, zu der Gürtelbautrommel (2).

6. Anordnung nach einem der vorhergehenden Ansprüche, bei der die Gürtelbautrommel (2) quer zu der ersten Transportschiene (16) zwischen einer Position vertikal über der ersten Transportschiene (16) und einer Position die benachbart der ersten Transportschiene (16) beabstandet ist, bewegt werden kann.

## Revendications

1. Ensemble d'unités dévolu à la fabrication d'un pneumatique non vulcanisé, ou pneumatique vert destiné à des véhicules, ledit ensemble étant pourvu :
d'une première unité (1) comprenant un tambour (2) de formation de toiles intermédiaires, un entraînement (3) dédié audit tambour (2) de formation des toiles intermédiaires, et une piqueuse (4) conçue pour coudre du matériau de toiles intermédiaires à agencer sur ledit tambour (2) de formation des toiles intermédiaires,
d'une deuxième unité (5) comprenant un tambour (6) de formation de carcasses, un entraînement (7) affecté audit tambour (6) de formation des carcasses, et une piqueuse (8) conçue pour coudre du matériau de carcasses à agencer sur ledit tambour (6) de formation des carcasses,
d'une troisième unité (9) comprenant un tambour (10) de mise en forme, un entraînement (11) assigné audit tambour (10) de mise en forme, un support (12) destiné audit tambour (10) de mise en forme, et une piqueuse (13) conçue pour coudre du matériau de pneumatique à agencer sur ledit tambour (10) de mise en forme,
d'une unité (14) d'alimentation en nappes de toiles intermédiaires, conçue pour délivrer des nappes de toiles intermédiaires au tambour (2) de formation des toiles intermédiaires,
d'une unité (15) d'alimentation en matériau de carcasses, destinée à délivrer du matériau de carcasses au tambour (6) de formation des carcasses,
d'un premier rail de transport (16), ledit premier rail de transport (16) étant placé, considéré dans la direction verticale, au-dessous du tambour (10) de mise en forme et du tambour (6) de formation des carcasses,
d'une unité (17) de retenue et de positionnement de bourrelets, ladite unité (17) comprenant des dispositifs (18, 19) de mise en place de bourrelets qui sont implantés de façon mobile sur le premier rail de transport (16), pour délivrer des bourrelets à un tambour à carcasses, et un dispositif (20) de chargement de bourrelets,
d'un premier anneau (21) de transfert de toiles intermédiaires, implanté de façon mobile sur le premier rail de transport (16),
d'un second anneau (22) de transfert de carcasses, implanté de façon mobile sur ledit premier rail de transport (16), et
d'une unité d'enlèvement (23), conçue pour évacuer un pneumatique vert, **caractérisé par le fait que** ledit ensemble est pourvu, par ailleurs,
d'un deuxième rail de transport (24), ledit deuxième rail de transport (24) s'étendant à distance du premier rail de transport (16), parallèlement à ce dernier, et occupant une position adjacente au tambour (6) de formation des carcasses,
d'un certain nombre d'unités d'agencement (25) conçues pour agencer, sur ledit tambour (6) de formation des carcasses, du matériau caoutchouteux tel qu'une bandelette enroulée sur une bobine (26), lesdites unités d'agencement (25) pouvant être mises en mouvement au-dessus dudit deuxième rail de transport (24).

2. Ensemble selon la revendication 1, dans lequel le deuxième rail de transport (24) s'étend jusqu'au-delà du premier rail de transport (16), sur l'un des côtés, sachant que ledit ensemble est pourvu d'une unité (27) dévolue à l'agencement d'un matériau caoutchouteux prédécoupé, ladite unité (27) étant équipée d'un certain nombre de convoyeurs d'alimentation (28) conçus pour délivrer du matériau caoutchouteux prédécoupé, et d'un certain nombre de convoyeurs d'agencement (29) conçus pour prélever du matériau caoutchouteux prédécoupé, délivré par lesdits convoyeurs d'alimentation, et pour agencer ledit matériau caoutchouteux prédécoupé sur le tambour (6) de formation des carcasses, lesdits convoyeurs d'agencement (29) pouvant être mis en mouvement au-dessus dudit deuxième rail de transport.

3. Ensemble selon la revendication 1 ou 2, dans lequel l'unité (15) d'alimentation en matériau de carcasses est dotée d'un premier élément (15a) et d'un second élément (15b), un troisième rail de transport (30) étant interposé entre ledit premier élément (15a) et ledit second élément (15b), et d'un convoyeur de transfert (31) conçu pour transférer du matériau de carcasses dudit premier élément (15a) audit second élément (15b), ledit convoyeur de transfert (31) pouvant être mis en mouvement au-dessus dudit troisième rail de transport (30).

4. Ensemble selon la revendication 3, dans lequel le premier élément (15a) comprend un certain nombre de sous-éléments disposés de manière adjacente, chaque sous-élément étant conçu pour délivrer un propre matériau de carcasses.

5. Ensemble selon l'une quelconque des revendications précédentes, dans lequel l'unité (14) d'alimentation en nappes de toiles intermédiaires présente un plateau rotatif (32) comprenant un certain nombre de dispositifs d'alimentation (33) conçus pour délivrer du matériau caoutchouteux enroulé sur une bobine (34), une unité de sectionnement (35) offrant un dispositif sectionneur (36) et un convoyeur de sectionnement (37) conçu pour prélever du matériau caoutchouteux délivré par un dispositif d'alimentation (33), et un convoyeur d'alimentation (38) conçu pour délivrer, au tambour (2) de formation des toiles intermédiaires, du matériau caoutchouteux découpé délivré par ledit convoyeur de sectionnement (37).

6. Ensemble selon l'une quelconque des revendications précédentes, dans lequel le tambour (2) de formation des toiles intermédiaires peut être mis en mouvement transversalement vis-à-vis du premier rail de transport (16), entre une position verticalement sus-jacente audit premier rail de transport (16) et une position espacée, adjacente audit premier rail de transport (16).
